# EUROPEAN PATENT SPECIFICATION

(11) **EP 3 356 577 B1**
(45) Date of publication and mention of the grant of the patent: **17.08.2022**
(21) Application number: 16852563.2
(22) Date of filing: 29.09.2016
(51) Int. Cl.: C25D 21/18, C25D 5/56, C23C 18/24

(54) **TREATMENT OF ETCH BATHS**
BEHANDLUNG VON ÄTZBÄDERN
TRAITEMENT DE BAIN DE GRAVURE

(30) Priority: 30.09.2015 US 201514870738
(43) Date of publication of application: 08.08.2018
(73) Proprietor: MacDermid Acumen, Inc., Waterbury, CT 06702 (US)
(72) Inventor: HERDMAN, Roderick, D., Tamworth Staffordshire B78 2JQ (GB); PEARSON, Trevor, Cradley Heath West Midlands B64 7HR (GB); CHAPANERI, Roshan, V., Foleshill Coventry CV6 5JH (GB)
(74) Representative: Novagraaf Group
(86) International application number: PCT/US2016/054350
(87) International publication number: WO 2017/059019

(56) References cited:
- WO-A1-2015/060196
- US-A- 3 663 613
- US-A- 5 882 500
- US-A1- 2011 083 965
- US-A1- 2011 311 433
- US-A1- 2013 186 862
- US-A1- 2013 186 862
- US-A1- 2013 334 059

## Description

### FIELD OF THE INVENTION

The present invention relates generally to an etchant for preparing a non-conductive substrate to accept metal plating thereon.

### BACKGROUND OF THE INVENTION

It is well known in the art to plate non-conductive substrates, (i.e. plastics) with metal for a variety of purposes. Plastic moldings are relatively inexpensive to produce and metal plated plastic is used for many applications. For example, metal plated plastics are used for decoration and for the fabrication of electronic devices. An example of a decorative use includes automobile parts such as trim. Examples of electronic uses include printed circuits, wherein metal plated in a selective pattern comprises the conductors of the printed circuit board, and metal plated plastics used for EMI shielding. ABS resins are the most commonly plated plastics for decorative purposes while phenolic and epoxy resins are the most commonly plated plastics for the fabrication of printed circuit boards.

Plating on plastic surfaces is used in the production of a variety of consumer items. Plastic moldings are relatively inexpensive to produce and plated plastic is used for many applications, including automotive trim. There are many stages involved in the plating of plastic. The first stage involves etching the plastic in order to provide mechanical adhesion of the subsequent metallic coatings and to provide a suitable surface for adsorption of the palladium catalyst which is typically applied in order to catalyze deposition of the initial metallic layer from an autocatalytic nickel or copper plating process. Following this, deposits of copper, nickel and/or chromium may be applied.

The initial etching of the plastic components is an essential part of the overall process. However, only certain types of plastic components are suitable for plating. The most common types of plastic for electroplating are acrylonitrile/butadiene/styrene (ABS) or a blend of ABS with polycarbonate (ABS/PC). ABS consists of two phases. The first phase is a relatively hard phase consisting of an acrylonitrile/styrene copolymer and the second phase is a softer polybutadiene phase.

Historically, this material has been etched almost exclusively using a mixture of chromic and sulfuric acids, which is highly effective as an etchant for ABS and ABS/PC. The polybutadiene phase of the plastic contains double bonds in the polymer backbone, which are oxidized by the chromic acid, thus causing complete breakdown and dissolution of the polybutadiene phase exposed at the surface of the plastic which gives an effective etch to the surface of the plastic.

However, chromic acid is a recognized carcinogen and is increasingly regulated, requiring that wherever possible, the use of chromic acid be replaced with safer alternatives. The use of a chromic acid etchant also has well-known and serious drawbacks, including the toxicity of chromium compounds which makes their disposal difficult, chromic acid residues remaining on the polymer surface that inhibit electroless deposition, and the difficulty of rinsing chromic acid residues from the polymer surface following treatment.

Early attempts to replace the use of chromic acid for etching plastics focused on the use of permanganate ions. The use of permanganate in combination with acid is described in U.S. Pat. No. 4,610,895 to Tubergen et al. Later, the use of permanganate in combination with an ionic palladium activation stage was suggested in U.S. Pat. Pub. No. 2005/019958 to Bengston. The use of acid permanganate solutions in combination with perhalo ions (e.g., perchlorate or periodate) was described in U.S. Pat. Pub. No. 2009/0092757 to Satou. Finally, the use of permanganate ions in the absence of alkali metal or alkaline earth metal cations was described in International Pub. No. WO 2009/023628 to Enthone.

Permanganate solutions are also described in U.S. Pat. No. 3,625,758 to Stahl et al. Stahl suggests the suitability of either a chrome and sulfuric acid bath or a permanganate solution for preparing the surface. In addition, U.S. Pat. No. 4,948,630 to Courduvelis et al. describes a hot alkaline permanganate solution that also contains a material, such as sodium hypochlorite, that has an oxidation potential higher than the oxidation potential of the permanganate solution. U.S. Pat. No. 5,648,125 to Cane describes the use of an alkaline permanganate solution comprising potassium permanganate and sodium hydroxide, wherein the permanganate solution is maintained at an elevated temperature, i.e., between about 75°C to 93.3 °C (165°F to 200 °F).

Under strongly acidic conditions, permanganate ions can react with hydrogen ions to produce manganese (II) ions and water according to the following reaction:

4MnO₄⁻+ 12H⁺ → 4Mn²⁺ + 6H₂O+ 5O₂ (1)

The manganese(II) ions formed by this reaction can then undergo further reaction with permanganate ions forming a sludge of manganese dioxide according to the following reaction:

4MnO₄⁻+ 2H₂O +5 Mn²⁺ → 5MnO₂ + 4H⁺ (2)

These formulations, based on strongly acidic permanganate solutions, are intrinsically unstable irrespective of whether the permanganate ion is added by alkali metal salts of permanganate or is electrochemically generated in situ. In comparison to the chromic acid etches, the poor chemical stability of acidic permanganate renders it effectively useless for large scale commercial applications. Alkaline permanganate etches are more stable, and are widely used in the printed circuit board industry for etching epoxy based printed circuit boards. However, alkaline permanganate is not an effective etchant for plastics such as ABS or ABS/PC and is unlikely to gain widespread commercial acceptance as an etchant for these materials.

More recently, efforts have focused on the use of trivalent manganese as an etchant for plastics, including ABS and ABS/PC. As described, for example, in U.S. Pat. Pub. No. 2013/0186862 to Pearson et al. trivalent manganese can be produced by electrolysis at low current density of divalent manganese ions in a strong acid solution.

Trivalent manganese is unstable and is highly oxidizing (standard redox potential of 1.51 versus normal hydrogen electrode). In solution, it very rapidly disproportionates to manganese dioxide and divalent manganese via the following reaction:

2Mn³⁺ + 2H₂O → MnO₂ + Mn²⁺ + 4H⁺ (3)

However, in a strong sulfuric acid solution, the trivalent manganese ion becomes metastable and forms a cherry purple/red colored sulfate complex, which is a suitable medium for the etching of ABS and has many advantages over chromium-free etches of the prior art.

While Pearson et al. describes the use of both phosphoric acid and sulfuric acid, the acid is typically sulfuric acid and the remarkable stability of manganese(III) ions in strong sulfuric acid provides the following advantages in use:
1) Mn(III) ions are formed at a low current density, thus the power requirements for the process are low.
2) The anode operates at a very low current density, so a small cathode in relationship to the anode area can be used to prevent cathodic reduction of the Mn(III) ions. This obviates the need for a divided cell and makes the engineering of an etchant regeneration cell simpler.
3) The process does not produce permanganate ions, so there is no possibility of producing manganese heptoxide in the solution, which is a considerable safety hazard as it is violently explosive.
4) Due to the high stability of the Mn(III) ions in strong sulfuric acid, the etchant can be sold ready for use.
5) Because other etch processes are based on permanganate, the result of the reaction of permanganate with Mn(II) ions causes rapid "sludging" with manganese dioxide and a very short lifetime of the etch, which is not an issue with the Mn(III) based etch, although there may be some disproportionation over time.
6) The electrolytic production of Mn(III) does not produce any toxic gases. While some hydrogen may be produced at the cathode, owing to the low current requirements, this would be less than that produced by many plating processes.

In order to obtain rapid rates of etching on the ABS plastic, it is necessary to use a high concentration of acid. Although phosphoric acid can be used, sulfuric acid is generally preferred. The presence of sulfate or bisulfate ions is necessary to form a complex with the manganese ions and a molar concentration of sulfuric acid of at least 8M is necessary to obtain good stability of the etch.

The concentration of sulfuric acid is at least 8 molar, more preferably between about 9 and about 15 molar. Below a concentration of about 9 molar, the rate of etch becomes slow and above about 14 molar, the solubility of manganese ions in the solution becomes low. For good etching of plastic, a concentration of sulfuric acid of at least about 12M is necessary to provide rapid etching. This has the effect of reducing the solubility of manganese ions in the bath and the maximum solubility of manganese ions in the bath at operating temperature is about 0.08M. Preferably, the concentration of sulfuric acid is between about 12 and 13 molar, which is dilute enough to allow the safe addition of water to the etch and strong enough to optimize the etch rate of the plastic. At this concentration of sulfuric acid, up to around 0.08M of manganese sulfate can be dissolved at the preferred operating temperature of the etch. For optimal etching, the concentration of manganese ions in solution should be as high as it is feasible to achieve.

The manganese(II) ions are preferably selected from the group consisting of manganese sulfate, manganese carbonate and manganese hydroxide although other similar sources of manganese(II) ions are known in the art. The concentration of manganese(II) ions may be in the range of between about 0.005 molar up to saturation. In one embodiment, the electrolyte also comprises colloidal manganese dioxide, which may form to some extent as a natural result of disproportionation of manganese(III) in solution, or may be added deliberately.

Manganese(III) ions can be conveniently generated by electrochemical means by the oxidation of manganese(II) ions. In addition, it is generally preferable that the electrolyte not contain any permanganate ions.

The amount of manganese that can be dissolved in the bath may be increased by replacing a portion of the sulfuric acid with another acid in which the manganese ions may be more soluble. Acids which would have both the necessary stability to oxidation and the ability to increase the solubility of manganese ions in the bath are methane sulfonic acid and methane disulfonic acid. Since the solubility of manganese(II) is much better in methane sulfonic acid (and sulfuric acid) than it is in methane disulfonic acid, the former choices produce better performance. Thus methane sulfonic acid is the preferred additional acid and sulfuric acid is the preferred primary acid. In this instance, the electrolyte for etching ABS and ABS/PC plastics may contain at least 8M of sulfuric acid and contains about 0M to about 6M of methane sulfonic acid or methane disulfonic acid, preferably from about 1M to about 6M methane sulfonic acid.

US 2011/083965 discloses a method of electrodepositing metals on semiconductor substrates having recessed features, the method comprising the steps of (a) providing a non-concentrated electrolyte solution comprising at least one copper salt, wherein said solution is not saturated at 0° C. and at higher temperatures; (b) concentrating the non-concentrated electrolyte solution comprising said at least one copper salt to form a concentrated solution and maintaining said concentrated solution at a temperature of at least about 20° C., wherein said concentrated solution would have formed a precipitate at 0° C.; and (c) contacting the semiconductor substrate with the concentrated electrolyte solution at a temperature of at least about 20° C. in an electroplating apparatus to at least partially fill the through-silicon via with copper.

### SUMMARY OF THE INVENTION

One of the major problems in production with the use of these Mn(III) etch bath is that the high concentration of sulfuric acid causes moisture absorption from the atmosphere that leads to a gradual dilution of the sulfuric acid content over time and a reduction in the etching performance. The extent of the problem varies with the ambient air conditions (humidity and temperature) and is thus also seasonal, with more problems experienced in a hot, humid climate.

One way to remove moisture from the solution and restore the desired high concentration of sulfuric acid is to remove a portion of the bath and to replace the portion with fresh material. However, the removed portion must then be treated as waste, along with the associated costs and environmental issues.

Another approach is to blow dehumidified air over the electrolyte solution in the electrolytic cell to achieve evaporation of water from the bath electrolyte contained in the electrolytic cell. However, for this to happen, the partial pressure of water in the air must be lower than the partial pressure of water in the etch bath. In addition, because the etch bath is open to the atmosphere during production, it is not practical to maintain a layer of dry air over the production tank. In addition, because the production tanks are generally extracted, the rate of dry air production must match the rate of extraction, which can be very high (i.e., more than 1,000 m³/hour).

Thus, there remains a need in the art for an improved method of maintaining the desired concentration of sulfuric acid in the acid electrolyte that overcomes the deficiencies of the prior art.

It is an object of the present invention to providing an electrolyte solution containing manganese(III) ions in a strong solution of sulfuric acid.

It is another object of the present invention to provide an improved method of maintaining the high concentration of sulfuric acid in the electrolyte.

It is still another object of the present invention to reduce moisture absorption in the electrolyte solution that can lead to a gradual dilution in the acid content over time.

To that end, in one embodiment, the present invention relates generally to a method of maintaining a concentration of sulfuric acid in an electrolyte comprising manganese(III) ions, wherein the manganese(III) ions form a metastable complex in a solution of sulfuric acid, the method comprising the steps of:
a) monitoring the electrolyte in an electrolytic cell to determine a concentration of sulfuric acid in the electrolyte;
b) removing a portion of the electrolyte from the electrolytic cell to an annex tank if the concentration of sulfuric acid decreases to less than 8 molar;
c) treating the removed portion of the electrolyte in the annex tank to remove moisture from the portion of the electrolyte and restore the concentration of sulfuric acid to between 12 and 13 molar; and
d) returning the treated portion of the electrolyte to the electrolytic cell;
   wherein moisture in the treated portion of the electrolyte is removed or reduced and the concentration of sulfuric acid is restored.

### BRIEF DESCRIPTION OF THE DRAWINGS

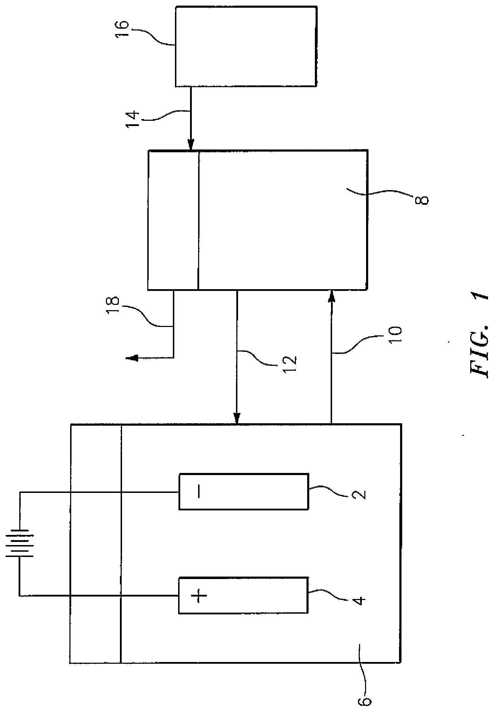

Figure 1 depicts a schematic of an electrolytic system in accordance with the present invention.

### DETAILED DESCRIPTION OF THE PREFERRED EMBODIMENTS

As described herein, the present invention relates generally to a method of maintaining a concentration of sulfuric acid in an electrolyte comprising manganese(III) ions, wherein the manganese(III) ions form a metastable complex in a solution of sulfuric acid, the method comprising the steps of:
a) monitoring the electrolyte in an electrolytic cell to determine a concentration of sulfuric acid in the electrolyte;
b) removing a portion of the electrolyte from the electrolytic cell to an annex tank if the concentration of sulfuric acid decreases to less than 8 molar;
c) treating the removed portion of the electrolyte in the annex tank to remove moisture from the portion of the electrolyte and restore the concentration of sulfuric acid to between 12 and 13 molar
d) returning the treated portion of the electrolyte to the electrolytic cell; wherein moisture in the treated portion of the electrolyte is removed or reduced and the concentration of sulfuric acid is restored.

The present invention takes the approach that a portion of the electrolyte can be removed from the electrolytic cell and fed into an enclosed annex tank for treatment to remove moisture.

As described above, due to the high concentration of sulfuric acid required, moisture absorption from the atmosphere can lead to a gradual dilution of acid content over time and also leads to a reduction in the etching performance. The extent of the problem varies with the ambient air conditions (humidity and temperature) and is thus also seasonal, with more problems experienced in a hot, humid climate. The, removal of moisture from the electrolyte solution as described herein can restore the high concentration of sulfuric acid to the electrolyte solution.

As described, for example, in U.S. Pat. Pub. No. 2013/0186862 to Pearson et al. an electrolyte comprising manganese(III) ions may be prepared by oxidizing an electrolyte comprising a solution of manganese(II) ions in at least one acid in an electrolytic cell wherein the electrolytic cell comprises an anode and a cathode; applying a current between the anode and the cathode.

In a preferred embodiment, the electrolyte solution, and particularly the concentration of sulfuric acid in the electrolytic cell, are closely monitored so that the concentration of the sulfuric acid and other electrolyte bath constituents remain with the preferred range for the process. That is, as described herein, the concentration of sulfuric acid is maintained at at least 8 molar, more preferably between about 9 and about 15 molar. For good etching of plastic, a concentration of sulfuric acid of at least about 12M is necessary to provide rapid etching, which also has the effect of reducing the solubility of manganese ions in the bath and the maximum solubility of manganese ions in the bath at operating temperature is about 0.08M. Thus, the concentration of sulfuric acid is, optionally but preferably maintained at a level between about 12 and 13M if sulfuric acid is the only acid present in the electrolyte.

In some instances, it may be desirable to replace a portion of the sulfuric acid with another acid in which the manganese ions may be more soluble such as methane sulfonic acid or methane disulfonic acid. In this instance, the electrolyte may contain at least 8M of sulfuric acid and about 0M to about 6M of methane sulfonic acid or methane disulfonic acid, preferably from about 1M to about 6M methane sulfonic acid.

When the concentration of sulfuric acid in the electrolyte decreases to about 8M or so, depending on the composition of the electrolyte, a portion of the electrolyte is removed from the electrolytic cell to the annex cell for treatment to remove moisture and thus restore the concentration of the sulfuric acid in the solution to the desired level.

The removed portion of the electrolyte is treated for the period of time necessary to restore the concentration of the sulfuric acid to the desired level and will depend in part on the desired concentration of sulfuric acid in the bath electrolyte as well as the extent to which the concentration of sulfuric acid has been depleted from the electrolyte. In a preferred embodiment, the electrolyte is treated for a period of about 1 minute to about 30 minutes, more preferably for about 5 to about 20 minutes until the desired level of sulfuric acid in the removed portion has been achieved. Thereafter, the now restored bath electrolyte can be returned to the main electrolytic cell.

As described above, the annex tank is an enclosed tank. Once the portion of the electrolyte is removed to the annex tank, dry gas may be fed over the surface of the electrolyte solution in the enclosed annex tank. While any dry gas may be used in the practice of the invention, air is generally preferred due to its lower cost and general availability. A dry gas is a gas with a partial vapor pressure of water vapor that is lower than the partial pressure of water in the solution being treated. In addition, it is also noted that a dry gas such as nitrogen has a much higher cost as well as a potential safely issue due to possible asphyxiation. Thus, the dry gas inlet is preferably a dry air inlet.

In addition, the source of dry air can be from a dehumidifier unit or may be compressed air. Compressed air is a convenient source of dried air for many plants and is generally readily available. Compressed air by nature is much drier than ambient air because the compression forces moisture of the gases. For minimum humidity, the compressed air can also be passed through a desiccant chamber before use to further reduce humidity. Suitable desiccants would be known to those skilled in the art and may include silica gel, sodium hydroxide, and calcium chloride, among others.

The dry air is fed into the enclosed annex tank from the source of dry air through the dry air inlet. The dry air is typically maintained at a temperature of between about 15 to about 30°C, more preferably about 20 to 25°C, and has an initial humidity of less than about 15%, more preferably, less than about 5% to remove water from the etchant baths and control moisture absorption in the baths.

Once the air passes over the surface of the electrolyte in the enclosed annex tank to absorb moisture from the electrolyte the solution, the now moist air can be removed from the enclosed annex tank through an air outlet that carries moist air out of the annex tank. The air outlet can be vented to an extraction duct so that the moist air is removed from the system through normal extraction. Thus, it is not necessary that the moist air be forcibly extracted, which allows for a much lower volume of dried air to be used.

Furthermore, using a suitably sized enclosed annex tank, which is optionally, but preferably, smaller than the main production tank, the need to remove the etch bath periodically can be minimized and possibly eliminated. It is also highly desirable that the rate of moisture removed from the annex tank matches or exceeds the rate of moisture absorption in the production tank. Thus, it is further contemplated that the annex tank can be operated on either a continuous basis or as a batch process.

In some manganese(III) electrolytic cell systems, a regeneration cell is required or at least preferred to maintain the Mn(III) content of the etchant and prevent build-up of Mn(II) ions in the electrolytic cell. Thus, if a regeneration cell is present, it is contemplated that the regeneration cell may be used for both replenishing or maintaining the Mn(III) content in the electrolyte and removing water from the electrolyte to restore the sulfuric acid content of the electrolyte in a single step. In the alternative, separate tanks or cells may be used for the maintaining or replenishing the Mn(III) content of the electrolyte and for removing water from the electrolyte.

As shown in Figure 1, the electrolytic system of the present invention typically comprises an electrolytic cell comprising a cathode 2 in contact with an electrolyte solution 6; and an anode 4 in contact with the electrolyte solution 6.

The electrolyte solution 6, as described herein, comprises manganese(III) ions in a solution of sulfuric acid and optionally, an additional acid selected from the group consisting of methane sulfonic acid, methane disulfonic acid and combinations thereof. The electrolyte solution initially contains an electrolyte comprising a solution of manganese(II) ions in a strong acid which are oxidized to manganese(III) ions. Thus, once the electrolyte has been oxidized to form the metastable complex of manganese(III) ions in sulfuric acid, the platable plastic can be immersed in the metastable complex for a period of time to etch the surface of the platable plastic. The time period of the immersion of the plastic in the electrolyte is preferably between about 10 and about 30 minutes.

Thereafter, once the electrolyte bath 6 picks up moisture and the concentration of sulfuric acid in the electrolyte solution is diluted to a certain level, at least a portion of the electrolyte bath can be circulated to the annex tank 8 for treatment. Thus, the electrolyte enters the enclosed annex tank 8 through a solution inlet 10 and the treated electrolyte is returned to the electrolyte bath 6 in the electrolytic cell through a solution outlet 12. Dry air enters the annex tank 8 through a dry air inlet 14 from a source of dry air 16. Once the dry air passes over the surface of the electrolyte solution in the annex tank 8, the now moist air is removed through the dry air outlet 18.

Annex tank 8, used to remove moisture from the solution, may be an enclosed tank in which the dry air is passed over the solution surface. Alternatively, it may contain a means of increasing the surface area of the solution in contact with the dry air, for example by passing the electrolyte over a cascade tray system or by spraying the solution into the dry air atmosphere. Such examples increase the evaporation rate which results in the need for only a very small annex tank.

The inventors have found that etch solutions absorb moisture at a rate of about 70g/hr per m² of etch solution surface area, when the etch solution is between 65-70 °C. By using dry air, the inventors found it was possible to evaporate moisture from similar etch solutions at a rate of up to 400 g/hr per m² of etch solution surface area, when the etch solution is between 65-70 °C.

The platable plastic is immersed in the electrolyte which comprises the metastable complex of manganese(III) ions in sulfuric acid and which is maintained at a temperature of between 30 and 80°C. The rate of etching increases with temperature and is slow below 50°C. The upper limit of temperature is determined by the nature of the plastic being etched. ABS begins to distort above 70°C, thus in a preferred embodiment the temperature of the electrolyte is maintained between about 50 and about 70°C, especially when etching ABS materials.

Articles etched in this manner may be subsequently electroplated using conventional pretreatment for plated plastics or the etched surface of the plastic may be used to enhance the adhesion of paint, lacquers or other surface coatings.

The anode and cathode usable in the electrolytic cell containing manganese(III) and strong sulfuric acid described herein may comprise various materials. The cathode may comprise a material selected from the group consisting of platinum, platinized titanium, niobium, iridium oxide coated titanium, and lead. In one preferred embodiment, the cathode comprises platinum or platinized titanium. In another preferred embodiment, the cathode comprises lead.

The anode may also comprise platinized titanium, platinum, iridium/tantalum oxide, niobium, boron doped diamond, or any other suitable material. However, while the combination of manganese(III) ions and strong sulfuric acid (i.e., 8-15 molar) can etch ABS plastic, the etchant is also very aggressive towards certain electrodes necessary to produce the manganese(III) ions. In particular, anodes having a titanium substrate may be rapidly degraded by the etchant. Other anode materials include vitreous carbon, reticulated vitreous carbon, and woven carbon fiber anodes, as well as lead and suitable lead alloys, as described, for example, in U.S. Pat. Pub. No. 2013/0186862 to Pearson et al.

The current density which can be applied in the electrolytic cell is limited in part by the oxygen overpotential on the anode material chosen. As an example, in the case of platinized titanium anodes, above a current density of approximately 0.4 A/dm², the potential of the anode is sufficiently high to liberate oxygen. At this point, the conversion efficiency of manganese(II) ions to manganese(III) ions falls and thus any further increase in current density is wasted. Furthermore, operating the anodes at the higher overpotential required to produce the higher current density tends to produce manganese dioxide at the anode surface rather than manganese(III) ions.

In addition, for efficient generation of manganese(III) ions, it is generally necessary to use an anode area which is large in comparison to the area of the cathode. Preferably, the area ratio of anode to cathode is at least about 10:1. By this means, the cathode can be immersed directly in the electrolyte and it is not necessary to have a divided cell. Although the process would work with a divided cell arrangement, this would introduce unnecessary complexity and expense.

Thus, it can be seen that the present invention described an improved method of maintaining the sulfuric acid content of a manganese(III) bath electrolyte solution for etching ABS and ABS/PC plastics in a consistent and efficient manner.

## Claims

1. A method of maintaining a concentration of sulfuric acid in an electrolyte (6) comprising manganese(III) ions, wherein the manganese (III) ions form a metastable complex in a solution of sulfuric acid, the method comprising the steps of:
a) monitoring the electrolyte in an electrolytic cell to determine a concentration of sulfuric acid in the electrolyte;
b) removing a portion of the electrolyte from the electrolytic cell to an annex tank (8) if the concentration of sulfuric acid decreases to less than 8 molar;
c) treating the removed portion of the electrolyte in the annex tank to remove moisture from the portion of the electrolyte and restore the concentration of sulfuric acid to between 12 and 13 molar; and
d) returning the treated portion of the electrolyte to the electrolytic cell;
wherein moisture in the treated portion of the electrolyte is removed or reduced and the concentration of sulfuric acid is restored.

2. The method according to claim 1, wherein the annex tank (8) is enclosed.

3. The method according to claim 1, wherein the removed portion of the electrolyte (6) is treated by passing a dry gas over the surface of the electrolyte in the annex tank (8).

4. The method according to claim 3, wherein the dry gas is fed over the surface through a dry gas inlet (14).

5. The method according to claim 3, wherein the annex tank (8) further comprises a gas outlet (18), whereby, as the dry gas passes over the surface of the electrolyte (6) and absorbs
moisture, the moisture-filled gas can be removed from the annex tank.

6. The method according to claim 5, wherein the dry gas is dry air.

7. The method according to claim 3, wherein the temperature of the dry gas is between 15 and 30°C.

8. The method according to claim 3, wherein the dry gas has a humidity at a point where it enters the enclosed annex tank (8) of less than 15%, optionally wherein the dry gas has a humidity at a point where it enters the enclosed annex tank of less than 10%, further optionally wherein the dry gas is passed through a desiccant chamber prior to entering the enclosed annex tank.

9. The method according to claim 1, wherein step c) is performed on a continuous basis.

10. The method according to claim 1, wherein step c) is performed on a batch basis.

11. The method according to claim 1, wherein the electrolyte (6) comprising manganese(III) ions is prepared by oxidizing an electrolyte comprising a solution of manganese(II) ions in at least one acid in an electrolytic cell wherein the electrolytic cell comprises an anode (4) and a cathode (2); applying a current between the anode and the cathode; and oxidizing the electrolyte to form manganese(III) ions.

12. The method according to claim 1, wherein step c) is performed for a period of time to remove moisture from the electrolyte (6) and restore the concentration of sulfuric acid in the electrolyte.

13. The method according to claim 12, wherein the period of time is in the range of 1 to 30 minutes.

## Patentansprüche

1. Verfahren zum Aufrechterhalten einer Konzentration von Schwefelsäure in einem Mangan(III)-Ionen umfassenden Elektrolyten (6), wobei die Mangan(III)-lonen einen metastabilen Komplex in einer Lösung von Schwefelsäure bilden, wobei das Verfahren die folgenden Schritte umfasst:
a) Überwachen des Elektrolyten in einer Elektrolysezelle, um eine Konzentration von Schwefelsäure in dem Elektrolyten zu bestimmen;
b) Entnehmen eines Teils des Elektrolyten aus der Elektrolysezelle in einen Anlagertank (8), wenn die Konzentration der Schwefelsäure auf weniger als 8 molar abnimmt;
c) Behandeln des entnommenen Teils des Elektrolyten in dem Anlagertank, um Feuchtigkeit aus dem Teil des Elektrolyten zu entziehen und die Konzentration von Schwefelsäure wieder auf zwischen 12 und 13 molar zu bringen; und
d) Zurückführen des behandelten Teils des Elektrolyten in die Elektrolysezelle;
wobei in dem behandelten Teil des Elektrolyten befindliche Feuchtigkeit entzogen oder reduziert wird und die Konzentration von Schwefelsäure wiederhergestellt wird.

2. Verfahren nach Anspruch 1, wobei der Anlagertank (8) umschlossen ist.

3. Verfahren nach Anspruch 1, wobei der entnommene Teil des Elektrolyten (6) behandelt wird, indem in dem Anlagertank (8) ein Trockengas über die Oberfläche des Elektrolyten geleitet wird.

4. Verfahren nach Anspruch 3, wobei das Trockengas durch einen Trockengaseinlass (14) über die Oberfläche zugeführt wird.

5. Verfahren nach Anspruch 3, wobei der Anlagertank (8) ferner einen Gasauslass (18) umfasst, durch den, wenn das Trockengas über die Oberfläche des Elektrolyten (6) strömt und Feuchtigkeit absorbiert, das mit Feuchtigkeit beladene Gas aus dem Anlagertank abgeleitet werden kann.

6. Verfahren nach Anspruch 5, wobei das Trockengas trockene Luft ist.

7. Verfahren nach Anspruch 3, wobei die Temperatur des Trockengases zwischen 15 und 30 °C beträgt.

8. Verfahren nach Anspruch 3, wobei das Trockengas an einem Punkt, an dem es in den umschlossenen Anlagertank (8) eintritt, eine Feuchtigkeit von weniger als 15 % aufweist, wobei das Trockengas optional an einem Punkt, an dem es in den umschlossenen Anlagertank eintritt, eine Feuchtigkeit von weniger als 10 % aufweist, wobei das Trockengas ferner optional durch eine Trockenmittelkammer geleitet wird, bevor es in den umschlossenen Anlagertank eintritt.

9. Verfahren nach Anspruch 1, wobei Schritt c) kontinuierlich durchgeführt wird.

10. Verfahren nach Anspruch 1, wobei Schritt c) chargenweise durchgeführt wird.

11. Verfahren nach Anspruch 1, wobei der Mangan(III)-Ionen umfassende Elektrolyt (6) hergestellt wird durch Oxidieren eines eine Lösung von Mangan(II)-lonen in mindestens einer Säure umfassenden Elektrolyten in einer Elektrolysezelle, wobei die Elektrolysezelle eine Anode (4) und eine Kathode (2) umfasst; Anlegen eines Stroms zwischen der Anode und der Kathode; und Oxidieren des Elektrolyten, um Mangan(III)-Ionen zu bilden.

12. Verfahren nach Anspruch 1, wobei Schritt c) über eine Zeitdauer durchgeführt wird, um Feuchtigkeit aus dem Elektrolyten (6) zu entziehen und die Konzentration von Schwefelsäure in dem Elektrolyten wiederherzustellen.

13. Verfahren nach Anspruch 12, wobei der Zeitraum im Bereich von 1 bis 30 Minuten liegt.

## Revendications

1. Procédé de maintien d'une concentration d'acide sulfurique dans un électrolyte (6) comprenant des ions manganèse (III), dans lequel les ions manganèse (III) forment un complexe métastable dans une solution d'acide sulfurique, le procédé comprenant les étapes consistant à :
a) surveiller l'électrolyte dans une cellule électrolytique pour déterminer une concentration d'acide sulfurique dans l'électrolyte ;
b) retirer une partie de l'électrolyte de la cellule électrolytique vers un réservoir annexe (8) si la concentration d'acide sulfurique diminue jusqu'à moins de 8 molaires ;
c) traiter la partie retirée de l'électrolyte dans le réservoir annexe pour retirer l'humidité de la partie de l'électrolyte et restaurer la concentration d'acide sulfurique entre 12 et 13 molaires ; et
d) ramener la partie traitée de l'électrolyte vers la cellule électrolytique ;
dans lequel l'humidité dans la partie traitée de l'électrolyte est retirée ou réduite et la concentration d'acide sulfurique est restaurée.

2. Procédé selon la revendication 1, dans lequel le réservoir annexe (8) est enfermé.

3. Procédé selon la revendication 1, dans lequel la partie retirée de l'électrolyte (6) est traitée en faisant passer un gaz sec par-dessus la surface de l'électrolyte dans le réservoir annexe (8).

4. Procédé selon la revendication 3, dans lequel le gaz sec est alimenté par-dessus la surface par l'intermédiaire d'une entrée de gaz sec (14).

5. Procédé selon la revendication 3, dans lequel le réservoir annexe (8) comprend en outre une sortie de gaz (18), moyennant quoi, à mesure que le gaz sec passe par-dessus la surface de l'électrolyte (6) et absorbe de l'humidité, le gaz rempli d'humidité peut être retiré du réservoir annexe.

6. Procédé selon la revendication 5, dans lequel le gaz sec est de l'air sec.

7. Procédé selon la revendication 3, dans lequel la température du gaz sec est comprise entre 15 et 30 °C.

8. Procédé selon la revendication 3, dans lequel le gaz sec a une humidité à un point où il entre dans le réservoir annexe enfermé (8) inférieure à 15 %, facultativement dans lequel le gaz sec a une humidité à un point où il entre dans le réservoir annexe enfermé inférieure à 10 %, facultativement en outre dans lequel le gaz sec est passé à travers une chambre de dessiccant avant d'entrer dans le réservoir annexe enfermé.

9. Procédé selon la revendication 1, dans lequel l'étape c) est mise en œuvre sur une base continue.

10. Procédé selon la revendication 1, dans lequel l'étape c) est mise en œuvre sur une base par lots.

11. Procédé selon la revendication 1, dans lequel l'électrolyte (6) comprenant des ions manganèse (III) est préparé par oxydation d'un électrolyte comprenant une solution d'ions manganèse (II) dans au moins un acide dans une cellule électrolytique dans lequel la cellule électrolytique comprend une anode (4) et une cathode (2) ; application d'un courant entre l'anode et la cathode ; et oxydation de l'électrolyte pour former des ions manganèse (III).

12. Procédé selon la revendication 1, dans lequel l'étape c) est mise en œuvre pendant une période de temps pour retirer l'humidité de l'électrolyte (6) et restaurer la concentration d'acide sulfurique dans l'électrolyte.

13. Procédé selon la revendication 12, dans lequel la période de temps est dans la plage de 1 à 30 minutes.
